# EUROPÄISCHE PATENTANMELDUNG

(11) **EP 3 216 680 A1**
(43) Veröffentlichungstag der Anmeldung: **13.09.2017**
(21) Anmeldenummer: 17160216.2
(22) Anmeldetag: 10.03.2017
(51) Int. Cl.: B62D 65/18, B62D 65/02, B23K 37/04, B23P 21/00

(54) **ANORDNUNG, DURCH WELCHE WÄHREND DER HERSTELLUNG EINER VORRICHTUNG LOSE ZUSAMMENGEFÜGTE EINZELTEILE DER VORRICHTUNG IN IHRE BESTIMMUNGSGEMÄSSE RELATIVLAGE BRINGBAR SIND**

(30) Priorität: 12.03.2016 DE 102016104559
(71) Anmelder: HAGER Sondermaschinenbau GmbH, 86753 Möttingen (DE)
(72) Erfinder: Hager, Hans, 86753 Möttingen (DE)
(74) Vertreter: Jannig, Peter

(57) **Zusammenfassung**

Es wird eine Anordnung beschrieben, durch welche während der Herstellung einer Vorrichtung lose zusammengefügte Einzelteile der Vorrichtung in ihre bestimmungsgemäße Relativlage bringbar sind, mit einer Spannvorrichtung, durch welche wenigstens eines der Einzelteile in die bestimmungsgemäße Relativlage zu wenigstens einem weiteren Einzelteil bringbar ist, einem die Spannvorrichtung tragenden Rahmen, und einem Basisaufbau, auf welchen der Rahmen von oben her aufsetzbar ist, und an welchem der darauf aufgesetzte Rahmen so fixierbar ist, dass der Rahmen in Bezug zu der Basisaufbau-Komponente, an welcher er fixiert ist, nicht bewegbar ist. Die beschriebene Anordnung zeichnet sich dadurch aus, dass ein Verstellmechanismus vorgesehen ist, durch welchen auch noch im am Basisaufbau fixierten Zustand des die Spannvorrichtung tragenden Rahmens die Position der Spannvorrichtung wunschgemäß veränderbar ist.

## Beschreibung

Die vorliegende Erfindung betrifft eine Anordnung gemäß dem Oberbegriff des Patentanspruchs 1.

Solche Anordnungen sind seit vielen Jahren in unzähligen Ausführungen bekannt. Die unter Einsatz der bekannten Anordnungen herstellbaren Gegenstände sind die unterschiedlichsten Gegenstände. Unabhängig hiervon weisen die bekannten Anordnungen völlig unterschiedliche Größen und Aufbauten auf. Es ist hier nicht möglich, alle bekannten Arten von Anordnungen gemäß dem Oberbegriff des Patentanspruchs 1 vorzustellen. Stellvertretend wird nachfolgend eine bekannte Anordnung für die Herstellung einer Kraftfahrzeug-Rohkarosse beschrieben, insbesondere die Anordnung, unter Verwendung welcher das Dach des herzustellenden Kraftfahrzeuges in seine bestimmungsgemäße Lage in Bezug zu der bis dahin fertiggestellten Rohkarosse bringbar ist.

Die Herstellung der Rohkarossen erfolgt zumindest in der Großserienfertigung Schritt für Schritt in mehreren Arbeitsstationen, die von jeder Rohkarosse nacheinander durchlaufen werden, wobei in jeder Arbeitsstation an der bis dahin hergestellten Rohkarosse ein bestimmter weiterer Rohkarossenherstellungsschritt durchgeführt wird. Zwischen den Arbeitsstationen sind Fördervorrichtungen vorgesehen, durch welche die bis dahin fertig gestellten Rohkarossen von Arbeitsstation zu Arbeitsstation transportiert werden. Der Transport erfolgt zeitgesteuert. D.h., die bis dahin fertig gestellten Rohkarossen bleiben jeweils eine ganz bestimmte Zeit in den Arbeitsstationen, wobei die Verweilzeit für alle Arbeitsstationen gleich ist, so dass alle gerade in der Herstellung befindliche Rohkarossen synchron bewegt werden können. Innerhalb der für alle Arbeitsstationen gleichen Verweilzeit müssen die in einer jeweiligen Arbeitsstation durchzuführenden Rohkarossenherstellungsschritte unter allen Umständen abgeschlossen sein, denn ein in einer Arbeitsstation nicht abgeschlossener Rohkarossenherstellungsschritt kann in der nachfolgenden Arbeitsstation nicht fortgesetzt werden. Die gesamte Anordnung wird als Rohkarossenstraße bezeichnet.

In einer der entlang der Rohkarossenstraße vorgesehenen Arbeitsstationen wird das Dach der herzustellenden Rohkarosse mit den bis dahin zusammengesetzten Bestandteilen der Rohkarosse verbunden. Diese Verbindung erfolgt üblicherweise durch Laserlöten oder Laserschweißen. Dabei ist es von größter Bedeutung, dass das Dach und der Rest der bis dahin zusammengebauten Rohkarosse exakt die bestimmungsgemäße Relativlage zueinander einnehmen. Die maximalen Toleranzen liegen im Bereich von einem zehntel Millimeter. Der in dieser Arbeitsstation durchzuführende Fügeprozess erfolgt unter Verwendung einer sogenannten Dachglocke. Eine Dachglocke ist eine der Dachform angepasste Spannvorrichtung, im welcher des Dach während der Verbindung mit dem Rest der bis dahin fertiggestellten Rohkarosse fixiert / eingespannt wird.

In der Rohkarossenstraße können Rohkarossen für verschiedene Fahrzeugmodelle und verschiedene Fahrzeugtypen hergestellt werden. Unterschiedliche Fahrzeugmodelle und unterschiedliche Fahrzeugtypen weisen zumindest teilweise unterschiedliche Dächer auf. Unterschiedliche Dächer erfordern aber die Verwendung von unterschiedlichen, an die jeweilige Dachgröße und Dachform angepassten Dachglocken. Wenn also in der Rohkarossenstraße aufeinanderfolgend Rohkarossen mit unterschiedlichen Dächern hergestellt werden sollen, müssen auch unterschiedliche Dachglocken verwendet werden.

Der Austausch von Dachglocken ist insofern schwierig, als die zur Verfügung stehende Zeit sehr knapp bemessen ist, denn wie vorstehend bereits erwähnt wurde, verweilen die bis dahin fertiggestellten Rohkarossen nur eine ganz bestimmte Zeit in den einzelnen Arbeitsstationen, wobei diese Zeit nicht verlängert wird, wenn ein Austausch der Dachglocke erfolgen muss.

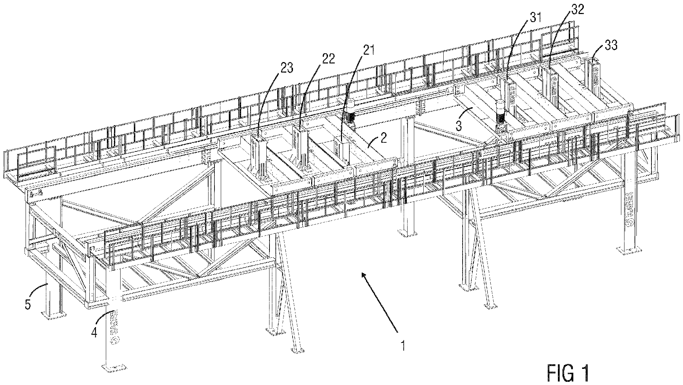

Figur 1 zeigt eine bekannte Arbeitsstation, in welcher das Dach einer Rohkarosse unter Zuhilfenahme einer Dachglocke mit dem Rest der bis dahin fertig gestellten Rohkarosse verbunden wird, und eine Transportvorrichtung, durch welche der Austausch der Dachglocke (der Transport von Dachglocken von und zur Arbeitsstation) bewerkstelligt wird.

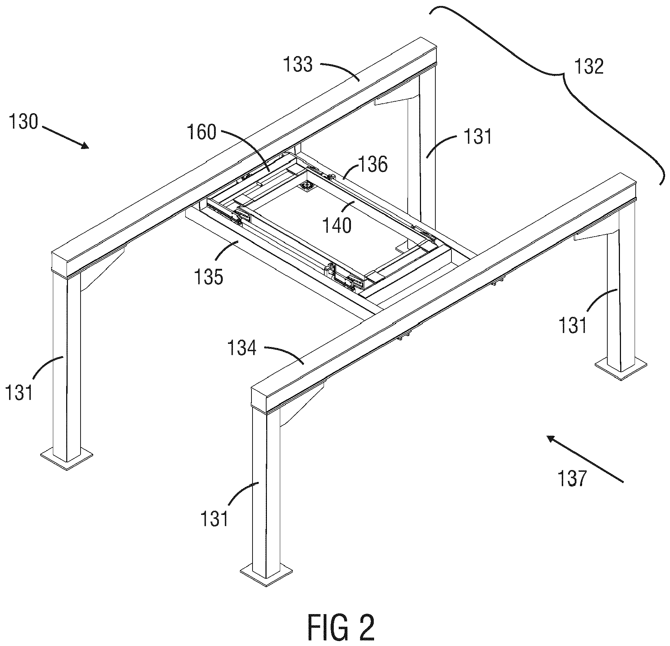

Die in der Figur 1 gezeigte Anordnung erstreckt sich über die (in der Figur 1 nicht gezeigte) Rohkarossenstraße. Die Richtung, in welche die bis dahin hergestellten Rohkarossen bewegt werden, ist durch einem mit dem Bezugszeichen 1 bezeichneten Pfeil gezeigt. Die Anordnung umfasst zwei Fahrwagen 2 und 3, von welchen jeder auf zwei mit gegenseitigem Abstand zueinander parallel verlaufenden Portalbrücken 4 und 5 fährt. An jedem der Fahrwagen 2, 3 sind drei z-Achsen 21, 22, 23 bzw. 31, 32, 33 montiert, welche jeweils eine Dachglocke tragen, wobei die Dachglocken in der Figur 2 jedoch nicht gezeigt sind. Die an den z-Achsen 21, 22, 23 und 31, 32, 33 hängenden Dachglocken sind durch die z-Achsen auf- und abbewegbar und durch die Fahrwagen 2 und 3 längs der Portalbrücken 4, 5 bewegbar. Die gerade benutzte Dachglocke ist im betrachteten Beispiel die mittig über der Rohkarossenstraße befindliche Dachglocke, im gezeigten Beispiel also die an der z-Achse 21 hängende Dachglocke; die z-Achse 21 ist daher, wie aus der Figur 1 ersichtlich ist, nach unten gefahren. Wenn nun bei der nächsten Rohkarosse ein anderes Dach aufzusetzen ist, für welches beispielsweise die an der z-Achse 32 hängende Dachglocke benötigt wird, so muss als erstes die z-Achse 21 die soeben noch benutzte Dachglocke anheben, dann der die z-Achse 21 tragende Fahrwagen 2 zur Seite fahren, dann der zweite Fahrwagen 3 über die Rohkarossenstraße fahren, so dass die z-Achse 32 zusammen mit der daran hängenden Dachglocke seine bestimmungsgemäße Position erreicht hat, und schließlich die an der z-Achse hängende Dachglocke durch die z-Achse abgelassen werden. Bei jedem Dachglockenwechsel müssen also sehr große Massen stark beschleunigt, mit sehr hohem Tempo bewegt, und wieder stark abgebremst werden.

Die in der Figur 1 gezeigte herkömmliche Transportvorrichtung für den Transport von Dachglocken von und zu einer Arbeitsstation muss daher sehr stabil aufgebaut sein, erfordert sehr starke Antriebsvorrichtungen, und hat zudem einen sehr großen Platzbedarf. Diesbezüglich verbesserte Transportvorrichtungen sind aus der DE 20 2009 006 856 U1 und der DE 20 2015 101 884 U1 bekannt. Bei diesen Anlagen sind für die gerade nicht benutzten Dachglocken (unterschiedlich realisierte) Dachglockenlager vorgesehen, und bei einem durchzuführenden Dachglockentausch wird die als nächste zu benutzende Dachglocke durch die Transportvorrichtung aus dem Dachglockenlager geholt und zur Arbeitsstation gebracht, und die zuletzt benutzte Dachglocke von der Arbeitsstation ins Dachglockenlager gebracht.

Allen erwähnten Transportvorrichtungen ist gemeinsam, dass sie die jeweils in der Arbeitsstation benötigte Dachglocke, genauer gesagt einen die Dachglocke tragenden Rahmen auf ein in der Arbeitsstation vorgesehenes, aber in der Figur 1 nicht gezeigtes Gestell absetzen, welches fest am Boden verankert ist. Dieses Gestell wird im Folgenden als Basisaufbau bezeichnet. Auf dem Basisaufbau, genauer gesagt an einer unterhalb der bestimmungsgemäßen Position der Dachglocke liegenden Stelle des Basisaufbaus befinden sich auch die in der Arbeitsstation miteinander zu verbindenden Rohkarossen Teile, also die bis dahin fertiggestellte Rohkarosse und das in dieser Arbeitsstation damit zu verbindende Dach. Der die Spannvorrichtung tragende Rahmen und der Basisaufbau weisen Fixiervorrichtungen auf, die dafür sorgen, dass sich der Rahmen im bestimmungsgemäß auf den Basisaufbau aufgesetzten Zustand in einer ganz bestimmten Relativlage in Bezug zum Basisaufbau befindet und in dieser Position am Basisaufbau fixiert ist. Die Position, die der Rahmen dann innehat, ist so gewählt, dass sich die vom Rahmen getragene Dachglocke genau in der Position befindet, die sie zum Bringen des Dachs in die bestimmungsgemäße Relativlage in Bezug zur bis dahin fertiggestellten Rohkarosse innehaben muss.

Wie vorstehend bereits erwähnt wurde, muss die Dachglocke im laufenden Betrieb der Anlage mehr oder weniger häufig gewechselt werden. Dabei muss selbstverständlich bei jedem Dachglockenwechsel zuverlässig sichergestellt sein, dass sich die Dachglocke exakt, das heißt auf zehntel Millimeter genau in ihrer bestimmungsgemäßen Position befindet. Dies erfordert einen enormen technischen Aufwand, zumal die verschiedenen, abwechselnd verwendeten Dachglocken unterschiedlich groß und schwer sein können, unterschiedliche Schwerpunkte und Gewichtsverteilungen haben können, unterschiedliche bestimmungsgemäße Positionen haben können, und unterschiedlich stark abgenutzt sein können.

Der vorliegenden Erfindung liegt daher die Aufgabe zugrunde, eine Möglichkeit zu finden, durch welche verschiedene Dachglocken unter allen Umständen möglichst schnell und mit möglichst geringem Aufwand in ihre bestimmungsgemäße Position innerhalb der Arbeitsstation bringbar sind.

Diese Aufgabe wird durch die in Patentanspruch 1 beanspruchte Anordnung gelöst.

Die erfindungsgemäße Anordnung zeichnet sich dadurch aus, dass ein Verstellmechanismus vorgesehen ist, durch welchen auch noch im am Basisaufbau fixierten Zustand des die Spannvorrichtung tragenden Rahmens die Position der Spannvorrichtung wunschgemäß veränderbar ist.

Durch einen solchen Verstellmechanismus kann die Position der Spannvorrichtung in Bezug zu den auszurichtenden Einzelteilen nachjustiert oder an sich ändernde Verhältnisse angepasst werden. Dabei können bei verschiedenen Spannvorrichtungen bzw. Spannvorrichtungs-Rahmen-Kombinationen unterschiedliche Verstellungen vorgenommen werden. Somit kann auch dann, wenn zwischen aufeinanderfolgenden Arbeitsschritten ein Wechsel der Spannvorrichtung erforderlich ist, gewährleistet werden, dass die jeweils verwendete Spannvorrichtung unter allen Umständen optimal in Bezug zu den durch sie auszurichtenden Einzelteilen positioniert ist.

Vorteilhafte Weiterbildungen der Erfindung sind der folgenden Beschreibung, den Unteransprüchen, und den Figuren entnehmbar.

Die Erfindung wird nachfolgend anhand eines Ausführungsbeispiels unter Bezugnahme auf die Figuren näher erläutert. Es zeigen
- Figur 1: die eingangs bereits beschriebene herkömmliche Arbeitsstation, in welcher unter Zuhilfenahme einer Dachglocke das Dach einer Rohkarosse mit dem Rest der bis dahin fertig gestellten Rohkarosse verbunden wird, einschließlich einer Transportvorrichtung, durch welche ein Austausch der Dachglocke (der Transport von Dachglocken von und zur Arbeitsstation) bewerkstelligt wird,
- Figur 2: eine perspektivische Ansicht eines Basisaufbaus der im Folgenden näher beschriebenen Anordnung,
- Figur 3: eine vergrößerte und detailliertere Darstellung des Basisaufbau-Abschnittes, auf welchen ein in Figur 4 gezeigter Rahmen aufzusetzen ist,
- Figur 4: eine perspektivische Ansicht des auf den Basisaufbau-Abschnitt gemäß Figur 3 aufsetzbaren Rahmens mit einer von diesem getragenen Dachglocke,
- Figur 5: eine perspektivische Ansicht des Zustandes, in welchem der in der Figur 4 gezeigte Rahmen auf die den Rahmen tragende Komponente des Basisaufbaus aufgesetzt ist,
- Figur 6: eine perspektivische Ansicht einer ersten Verstellvorrichtung, durch welche im bereits am Basisaufbau fixierten Zustand des die Dachglocke tragenden Rahmens die Position der Dachglocke veränderbar ist,
- Figur 7: eine perspektivische Ansicht zur Veranschaulichung des Zusammenwirkens der in den Figuren 5 und 6 gezeigten Anordnungen,
- Figur 8A: ein Fixiermechanismus zum Fixieren des die Dachglocke tragenden Rahmens an der den Rahmen tragenden Basisaufbau-Komponente, in einem Zustand, in welchem keine Fixierung des Rahmens erfolgt ist,

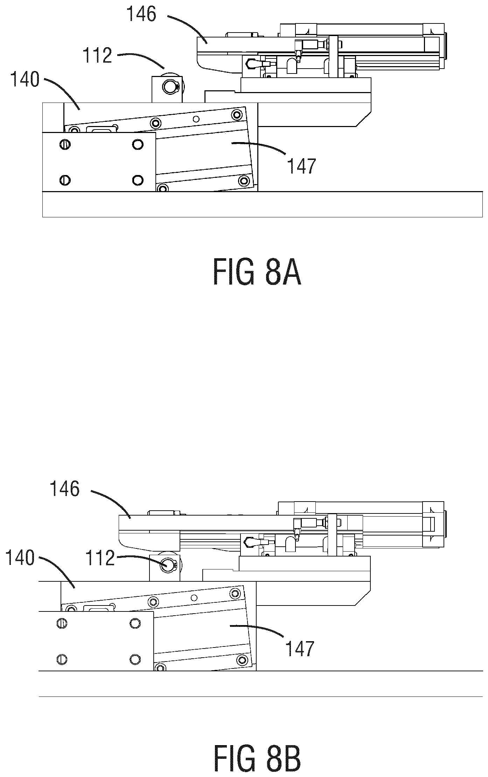

- Figur 8A: den Fixiermechanismus gemäß Figur 8A in einem Zustand, in welchem der die Dachglocke tragende Rahmens an der den Rahmen tragenden BasisaufbauKomponente fixiert ist,

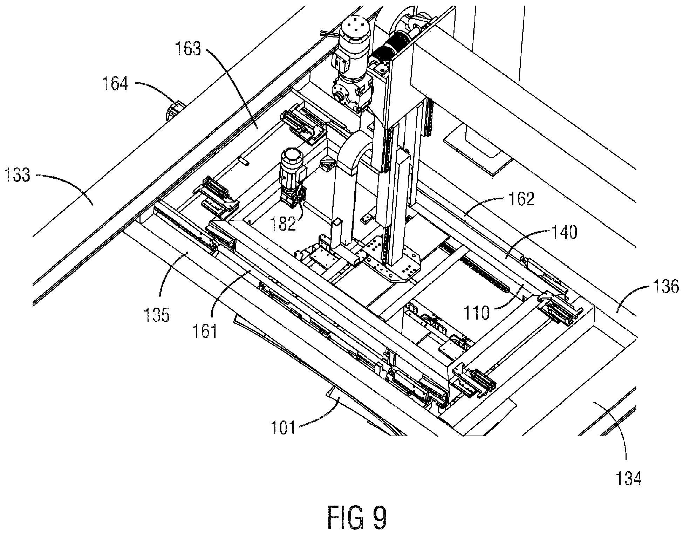

- Figur 9: eine perspektivische Ansicht der hier vorgestellten Anordnung in dem Zustand, in welchem der die Dachglocke tragende Rahmen auf den Basisaufbau aufgesetzt wird, und

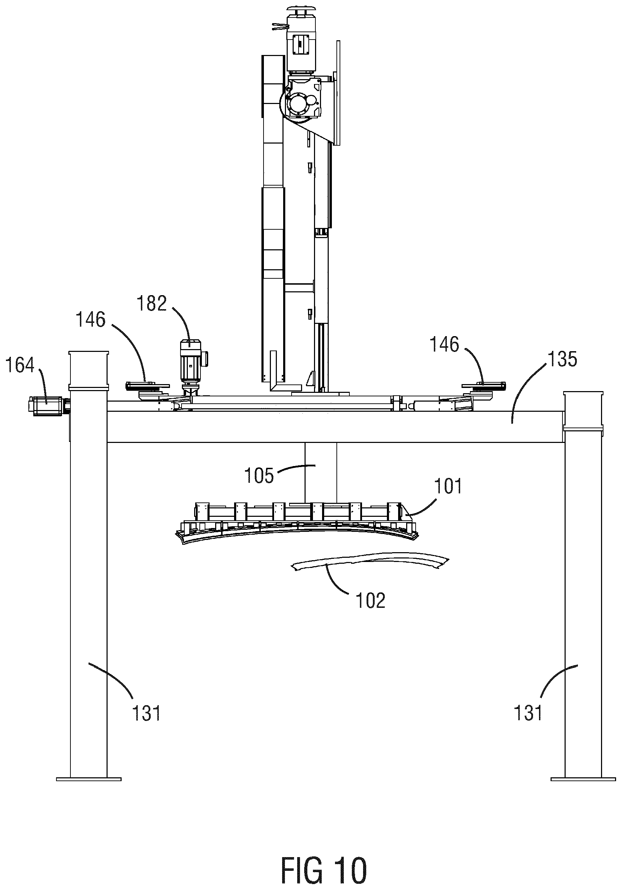

- Figur 10: eine Seitenansicht der hier vorgestellten Anordnung in dem in der Figur 9 gezeigten Zustand.

Die im Folgenden näher beschriebene Anordnung ist eine Anordnung, durch welche während der Herstellung einer Vorrichtung lose zusammengefügte Einzelteile der Vorrichtung in ihre bestimmungsgemäße Relativlage bringbar sind. Im betrachteten Beispiel handelt es sich bei der herzustellenden Vorrichtung um ein Kraftfahrzeug, genauer gesagt um eine Kraftfahrzeug-Rohkarosse. Die lose zusammengefügten Einzelteilen, die durch die beschriebene Anordnung in ihre bestimmungsgemäße Relativlage gebracht werden sollen, sind im betrachtete Beispiel das Dach des herzustellenden Kraftfahrzeuges und die bis dahin fertiggestellte Rohkarosse. Diese Einzelteile werden im bestimmungsgemäß zueinander ausgerichteten Zustand miteinander verbunden, im betrachteten Beispiel durch Laserlöten oder Laserschweißen. Die beschriebene Anordnung ist in einer Arbeitsstation einer Rohkarossenstraße einsetzbar, genauer gesagt, in der Arbeitsstation einsetzbar, in welcher das Dach einer Rohkarosse mit dem Rest der bis dahin fertig gestellten Rohkarosse verbunden wird.

Es sei bereits an dieser Stelle ausdrücklich darauf hingewiesen, dass diese Anordnung nur ein spezielles Ausführungsbeispiel der hier vorgestellten Art von Anordnung ist. Die erfindungsgemäße Anlage kann auch bei der Herstellung beliebiger anderer Vorrichtungen zum Einsatz kommen, und für die Ausrichtung beliebiger anderer Gegenstände ausgelegt sein.

Die Ausrichtung des Daches in Bezug zum Rest der bis dahin fertiggestellten Rohkarosse erfolgt wie bei den eingangs beschriebenen herkömmlichen Anordnungen unter Verwendung einer sogenannten Dachglocke.

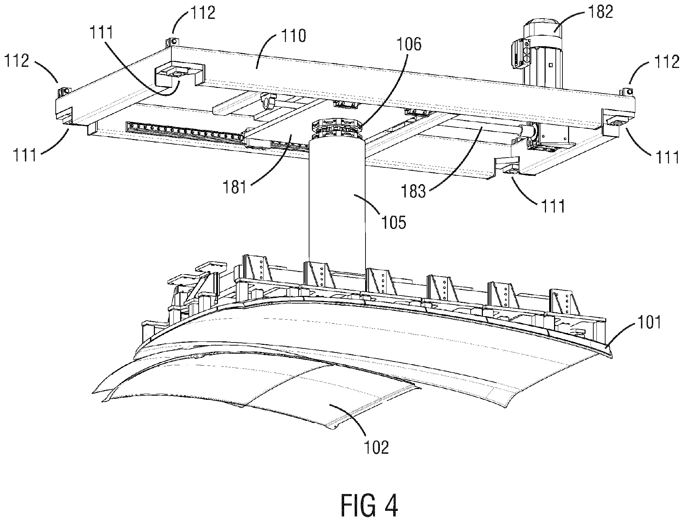

Eine solche Dachglocke ist schematisch unter anderem in Figur 4 gezeigt. Die Dachglocke ist dort mit dem Bezugszeichen 101 bezeichnet.

Die Dachglocke 101 hat den selben Aufbau und die selbe Funktion wie die bei herkömmlichen Anordnungen, beispielsweise bei den eingangs beschriebenen Anordnungen vorwendeten Dachglocken.

D.h., die Dachglocke 101 ist eine der Dachform angepasste Spannvorrichtung, im welcher des Dach während der Verbindung mit dem Rest der bis dahin fertiggestellten Rohkarosse eingespannt und fixiert wird. In der Figur 4 ist unterhalb der Dachglocke 101 schematisch ein von der Dachglocke einzuspannendes und zu fixierendes Dach 102 dargestellt.

Die Dachglocke 101 ist über einen starren Adapter 105 mit einem Rahmen 110 verbunden, welcher im Folgenden als Wechselrahmen bezeichnet wird. Die Dachglocke 101 wird vom Wechselrahmen 110 getragen.

Der Wechselrahmen 110 ist dazu ausgelegt, durch eine in den Figuren 9 und 10 teilweise gezeigte Transportvorrichtung vertikal von oben auf einen in der Figur 2 gezeigten Basisaufbau 130 aufgesetzt zu werden.

Dabei können prinzipiell beliebige Transportvorrichtungen zum Einsatz kommen, also beispielsweise die eingangs unter Bezugnahme auf die Figur 1 beschriebene Transportvorrichtung, oder besser die in der DE 20 2009 006 856 U1 beschriebene Transportvorrichtung, oder noch besser die in der DE 20 2015 101 884 U1 beschriebene Transportvorrichtung. Die in den Figuren 9 und 10 teilweise dargestellte Transportvorrichtung ist eine Transportvorrichtung gemäß der DE 20 2015 101 884 U1.

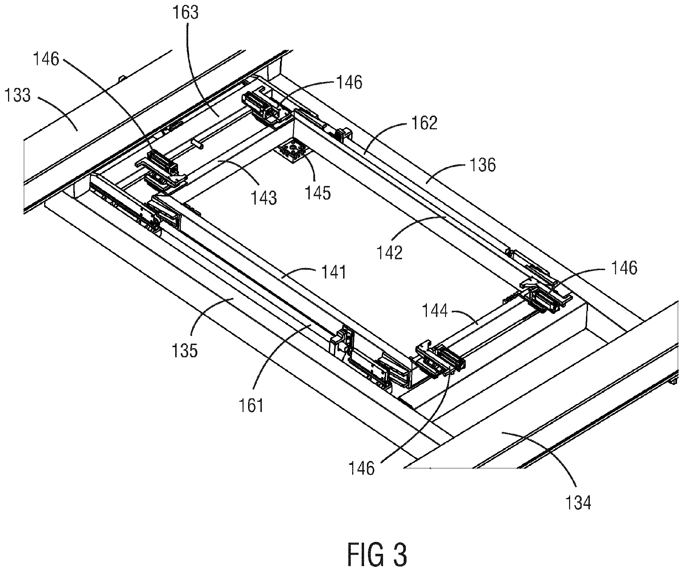

Der Basisaufbau 130 wird im betrachteten Beispiel durch einen Präzisionsstahlbau gebildet, der fest am Boden verankert und mit höchster Präzision hergestellt und ausgerichtet ist. Der Basisaufbau 130 umfasst unter anderem vier Säulen 131 und eine darauf aufgesetzte Trägerkonstruktion 132, wobei die Trägerkonstruktion im betrachteten Beispiel zwei auf die Säulen 131 aufgesetzte Längsträger 133 und 134 und zwei die Längsträger miteinander verbindende Querträger 135 und 136 umfasst. Die Säulen 131, die Längsträger 133, 134 und die Querträger sind starr miteinander verbunden und nicht relativ zueinander bewegbar. Zwischen die Querträger 133, 134 ist ein zweiter Rahmen 140 eingesetzt, der im Folgenden als Abspannrahmen bezeichnet wird. Der den Abspannrahmen 140 enthaltende Basisaufbau-Abschnitt ist in Figur 3 vergrößert und detailierter dargestellt. Der Abspannrahmen 140 ist eine bewegbare Basisaufbau-Komponente, die relativ zum Rest des Basisaufbaus 130 wunschgemäß weit vertikal auf- und abbewegbar ist. Hierauf wird später noch genauer eingegangen.

Wie bereits erwähnt wurde und wie später noch genauer erläutert werden wird, wird auf den Basisaufbau 130, genauer gesagt auf den Abspannrahmen 140 desselben der die Dachglocke 101 tragende Wechselrahmen 110 zusammen mit der von diesem getragenen Dachglocke 101 aufgesetzt. Der Wechselrahmen 110 wird nach dem Aufsetzen auf den Abspannrahmen 140 an diesem so fixiert, dass die diese Rahmen nicht mehr relativ zueinander bewegbar sind. Wie ebenfalls später noch genauer erläutert werden wird, können anschließend die Dachglocke 101 in Bezug zum Wechselrahmen 110 und der Abspannrahmen 140 in Bezug zum Rest des Basisaufbaus 130 bewegt werden, wodurch im Ergebnis die Dachglocke 101 exakt in ihre bestimmungsgemäße Position bringbar ist.

Ebenfalls auf dem Basisaufbau 130, genauer gesagt unmittelbar unter der bestimmungsgemäßen Position der Dachglocke 101 befinden sich auch die in dieser Arbeitsstation zu verbindenden Rohkarossen-Teile, also das Dach und die bis dahin fertiggestellte Rohkarosse. Diese Rohkarossen-Teile werden durch eine in den Figuren nicht gezeigte Fördervorrichtung in einer in der Figur 2 durch einen Pfeil 137 bezeichneten Rohkarossen-Durchlaufrichtung zwischen die Säulen 131 des Basisaufbaus 130 transportiert und dort durch eine in den Figuren ebenfalls nicht gezeigte Hubvorrichtung in die Position gebracht, die sie zur Ausführung der in der Arbeitsstation durchzuführenden Arbeitsschritte innehaben müssen. Die Rohkarossen-Durchlaufrichtung 137 verläuft parallel zu den Querträgern 135, 136 der Trägerkonstruktion 132 wird im Folgenden auch als x-Richtung bezeichnet.

Die Trägerkonstruktion 132 und die gegenseitige Abstände der Säulen 131 sind, wie aus der Figur 2 deutlich ersichtlich ist, vorzugsweise größer als es zum Tragen des Wechselrahmens 110 samt Dachglocke 101 erforderlich wäre. Dadurch haben die Säulen 131 einen größeren Abstand zu der zwischen den Säulen befindlichen Rohkarosse, was seinerseits größere Freiheiten bei den Bewegungen der in den Figuren nicht gezeigten Löt-oder Schweißroboter schafft, die in dieser Arbeitsstation das Dach mit dem Rest der bis dahin fertiggestellten Rohkarosse verbinden.

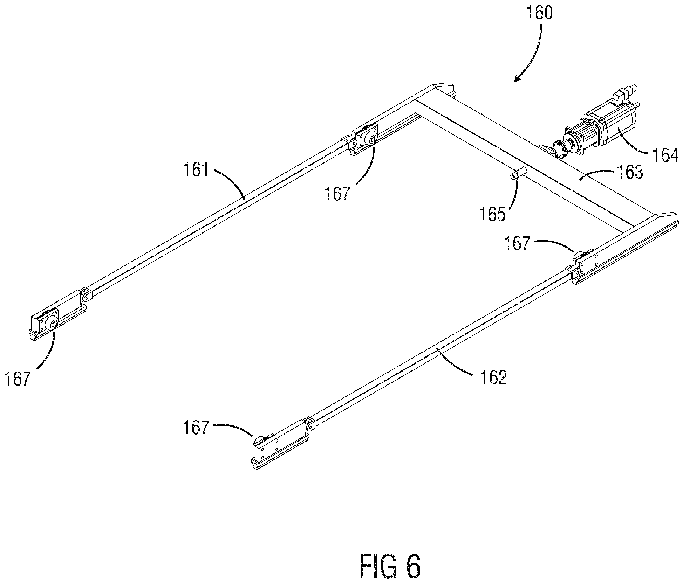

Wie insbesondere aus der Figur 3 ersichtlich ist, ist der Abspannrahmen 140 zwischen den Querträgern 135, 136 der Trägerkonstruktion 132 angeordnet. Der Abspannrahmen 140 umfasst zwei parallele Längsholme 141 und 142, die parallel zu den Querträgern 135, 136 der Trägerkonstruktion 132 verlaufen, und zwei die Längsholme 141, 142 miteinander verbindende Querholme 143 und 144. Die Längsholme 141, 142 und die Querträger 135, 136 der Trägerkonstruktion 132 weisen an den einander zugewandten Seiten miteinander in Eingriff stehende komplementäre Führungsvorrichtungen auf, entlang welcher der Abspannrahmen 140 in Bezug zu den Querträgern 135, 136 vertikal auf und abbewegbar ist. Auf welcher Höhe der Abspannrahmen 140 zu liegen kommt ist durch eine in der Figur 6 gezeigte, ebenfalls an der Trägerkonstruktion 132 befestigte Verstellvorrichtung 160 wunschgemäß einstellbar. Hierauf wird später noch genauer eingegangen. Im Gegensatz zu den bekannten Basisaufbauten, die in Arbeitsstationen für die Dachmontage bei der Rohkarossenherstellung zum Einsatz kommen, enthält der Basisaufbau der hier vorgestellten Anordnung also wenigstens eine Basisaufbau-Komponente, die in Bezug zum Rest des Basisaufbaus 130 bewegbar ist. Der Basisaufbau enthält somit sowohl unbewegbare Komponenten, die fest irgendwo verankert oder starr miteinander verbunden sind (Säulen 131, Längsträger 132, 133, Querträger, 134, 135), als auch relativ zu den unbewegbaren Komponenten bewegbare Komponenten (Abspannrahmen 140, Verstellvorrichtung 160).

Der Wechselrahmen 110 wird auf eine der bewegbaren Komponenten des Basisaufbaus 130, genauer gesagt auf den Abspannrahmen 140 aufgesetzt. Genauer gesagt wird der Abspannrahmen auf vertikale Zentrierkonusse 145 (siehe beispielsweise Figur 3) aufgesetzt, die am Abspannrahmen 140 vorgesehen sind. Die Zentrierkonusse 145 gehen von Klötzen ab, die in den in den Innenecken des Abspannrahmens 140 vorgesehen sind. In jeder Innenecke des Abspannrahmens 140 befindet sich ein Klotz mit einem davon abgehenden vertikalen Zentrierkonus 145. An der Unterseite des Wechselrahmens 110 sind in den Ecken vertikale Zentrieröffnungen 111 vorgesehen (siehe Figur 4), in welchen bei bestimmungsgemäßem Aufsetzen des Wechselrahmens 110 auf den Abspannrahmen 140 die Zentrierkonusse 145 zu liegen kommen. Die Zentrieröffnungen 111 sind vorzugsweise komplementär zu den Zentrierkonussen 145 ausgebildet. Die Zentrierkonusse 145 und die Zentrieröffnungen 111 machen es möglich, dass beim Aufsetzen des Wechselrahmens 110 auf den Abspannrahmen 140 ein gewisser gegenseitiger Versatz zulässig ist. Die Zentrierkonusse 145 werden von den Zentrieröffnungen 111 eingefangen und gelangen schließlich formschlüssig miteinander in Kontakt. Einhergehend damit erfolgt eine automatische Zentrierung der beiden Rahmen 110 und 140 in x-, y- und z-Richtung.

Es dürfte einleuchten und bedarf keiner näheren Erläuterung, dass es auch möglich ist, die Zentrierkonusse 145 am Wechselrahmen 110 vorzusehen, und die Zentrieröffnungen 111 am Abspannrahmen 140. Auch müssen die Zentrierkonusse 145 und die zugeordneten Zentrieröffnungen 111 nicht unbedingt in den Ecken der Rahmen 110, 140 angeordnet sein, sondern können auch anderswo vorgesehen werden.

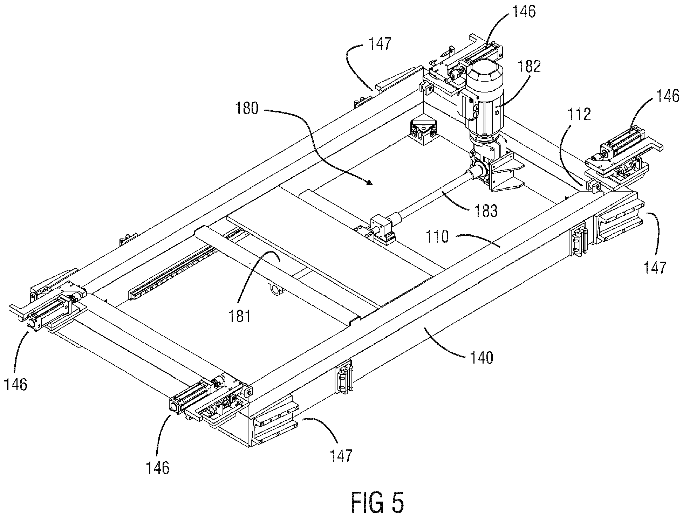

Der Zustand in welchem der Wechselrahmen 110 bestimmungsgemäß auf den Abspannrahmen 140 aufgesetzt ist, ist beispielsweise in Figur 5 gezeigt. In diesem Zustand befinden sich die Zentrierkonusse 145 in den Zentrieröffnungen, und der Wechselrahmen 110 liegt innerhalb des Abspannrahmens 140.

Im so auf den Basisaufbau 130 aufgesetzten Zustand des Wechselrahmens 110 wird der Wechselrahmen an der den Wechselrahmen tragenden Basisaufbau-Komponente, also am Abspannrahmen 140 fixiert. Die Fixierung erfolgt unter Verwendung von auf der Oberseite des Spannrahmens 140 vorgesehenen Schiebern 146, die horizontal verschiebbar sind. Diese Schieber sind beispielsweise in der Figur 5, und in vergrößerter Darstellung in den Figuren 8A und 8B gezeigt. Im betrachteten Beispiel sind vier Schieber 146 vorgesehen, wobei je zwei Schieber 146 auf jedem der Querholme 143, 144 des Abspannrahmens 140 angebracht sind. Die Schieber 146 befinden sich jeweils in der Nähe der Ecken des Anspannrahmens 140. Die Schieber sind im betrachteten Beispiel parallel zu den Längsholmen 141, 142 des Abspannrahmens 140 ausfahrbar und einziehbar. Es können jedoch auch mehr oder weniger Schieber 146 vorgesehen sein, und die vorhandenen Schieber können auch an beliebigen anderen Stellen des Abspannrahmens vorgesehen sein. In der Figur 5 und der Figur 8A befinden sich die Schieber 146 in einer zurückgezogenen Stellung, in welcher sie nicht in den seitlich durch die Längsholme 141, 142 und die Querholme 143, 144 begrenzten Bereich hineinragen. In diesem Zustand werden das Aufsetzen des Wechselrahmens 110 auf den Abspannrahmen 140 und das Abnehmen des Wechselrahmens 110 vom Abspannrahmen 140 durch die Schieber 146 nicht behindert. Zum Fixieren des Wechselrahmens 110 am Abspannrahmen 140 werden die Schieber 146 ausgefahren, so dass sie über dem Wechselrahmen 110 zu liegen kommen und diesen nach unten drücken. Auf der Oberseite des Wechselrahmens 110 ist pro Schieber 146 eine Rolle 112 vorgesehen, wobei diese Rollen um parallel zu den Querholmen 143, 144 verlaufende Achsen drehbar sind und bei ausgefahrenen Schiebern 146 unter den Schiebern zu liegen kommen und von dem Schiebern nach unten gedrückt werden. Das Nachuntendrücken der Rollen 112 bewirkt auch ein Nachuntendrücken des Wechselrahmens 110, an welchem die Rollen befestigt sind. Die mit den Rollen 112 in Kontakt kommende Unterseite der Schieber 146 weist eine Schräge auf, so dass die Rollen 112 und der diese tragende Wechselrahmen 110 umso stärker nach unten auf den Abspannrahmen 140 gedrückt werden, je weiter die Schieber 146 ausgefahren werde. Die Figur 8 zeigt die sich bei ausgefahrenen Schiebern einstellenden Verhältnisse. Spätestens bei wie in der Figur 8B gezeigt ausgefahrenen Schiebern 146 wird der Wechselrahmen 110 so stark auf den Abspannrahmen 140 gedrückt, dass die beiden Rahmen 110, 140 nicht mehr relativ zueinander bewegbar sind. Vertikale Relativbewegungen werden durch die Schieber 146 verhindert, und horizontale Bewegungen durch die vorstehend bereits erwähnten Führungsvorrichtungen, durch welche die Rahmen 110, 140 aneinander geführt werden, und die aber wie erwähnt nur vertikale Relativbewegungen zulassen.

Eine auf diese Art erfolgende, mechatronische Fixierung des Wechselrahmens 110 am Basisaufbau erweist sich als vorteilhaft, weil sich bei einem derartigen System nichts verkanten oder verhaken kann, und auch keine Anfälligkeit gegen sonstige Störungen besteht. Das Aufsetzen des Wechselrahmens auf den Basisaufbau und die Fixierung daran lässt sich somit besonders schnell und sicher durchführen.

Im Idealfall befindet sich nach dem Fixieren des Wechselrahmens 110 am Abspannrahmen 140 die vom Wechselrahmen 110 getragene Dachglocke 101 exakt in ihrer bestimmungsgemäßen Position.

Damit bei Bedarf eine Justierung oder Nachjustierung der Dachglocken-Position vorgenommen werden kann, ist am Basisaufbau 130, genauer gesagt an einer nicht bewegbaren Basisaufbau-Komponente ferner die vorstehend bereits erwähnte, in der Figur 6 gezeigte erste Verstellvorrichtung 160 vorgesehen.

Die erste Verstellvorrichtung 160 ist Teil eines Verstellmechanismus, durch welchen die Position der Dachglocke 101 bei Bedarf wunschgemäß verändert werden kann.

Die erste Verstellvorrichtung 160 enthält einen U-förmigen Schieber, der aus zwei parallelen Längsschenkeln 161 und 162 und einem diese verbindenden Querschenkel 163 zusammengesetzt ist. Die erste Verstellvorrichtung 160 umfasst ferner einen Elektromotor 164, der über eine Gewindespindel 165 mit dem Schieber 161-163 verbunden ist und hierüber den Schieber 161-163 bei Bedarf wunschgemäß verschieben kann.

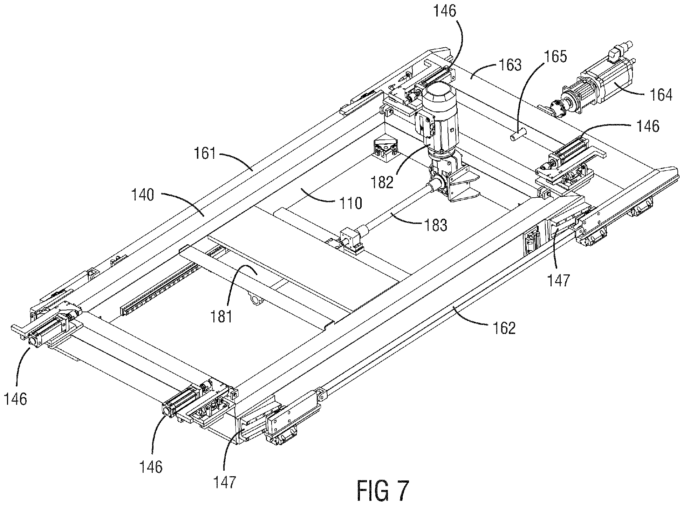

Die erste Verstellvorrichtung 160 ist so bemessen und ausgebildet, dass im bestimmungsgemäß montierten Zustand die Längsschenkel 161 und 162 zwischen den Längsholmen 141, 142 des Abspannrahmens 140 und den Querträgern 135, 136 des Basisaufbaus 130 zu liegen kommen. Wie die erste Verstellvorrichtung 160 und der Abspannrahmen 140 bei bestimmungsgemäßer Montage relativ zueinander angeordnet sind, ist aus der Figur 7 ersichtlich.

Der Motor 164 ist an einer der nicht bewegbaren Basisaufbau-Komponenten befestigt. Über den Motor 164 und die Gewindespindel 165 ist der Schieber 161-163 in Längsrichtung der Längsschenkel 161, 162 horizontal verschiebbar. Ein solches Verschieben hat automatisch auch eine entsprechende Relativbewegung des Schiebers 161-163 in Bezug zum horizontal nicht bewegbaren Abspannrahmen zur Folge.

An den einander zugewandten Seiten der Querträger 135, 136 des Basisaufbaus 130 sind in den Figuren nicht gezeigte Führungsvorrichtungen vorgesehen, entlang welcher die Längsschenkel 161 und 162 der ersten Verstellvorrichtung 160 bei deren Vor- und Zurückbewegung geführt, und durch welche sie in der horizontalen Lage gehalten werden.

Der Schieber 161-163 ist so mit dem Abspannrahmen 140 gekoppelt, dass durch ein Verschieben des Schiebers 161-163 in horizontaler Richtung eine Bewegung des Abspannrahmens 140 in vertikaler Richtung erzwungen wird, wobei es vom Umfang des Verschiebens des Schiebers 161-163 abhängt, in welchem Umfang der Abspannrahmen nach oben bzw. unten bewegt wird.

Dies kann auf unterschiedliche Art und Weise realisiert werden. Eine Realisierungsmöglichkeit besteht darin,
- dass am Schieber auf der dem Abspannrahmen zugewandten Seite Rollen vorgesehen sind, die um eine quer zur Schieberichtung des Schiebers verlaufende horizontale Achse drehbar sind,
- dass in den Rollen zugewandten vertikalen Flächen des Abspannrahmens Nuten ausgebildet sind, welche etwa eine dem Rollendurchmesser entsprechende Breite haben und die im übrigen so ausgebildet sind, dass die Rollen darin laufen können,
- wobei die Nuten von unten nach oben ansteigen und die Rollen in vertikaler Richtung nicht bewegbar sind.

Von dieser Realisierungsmöglichkeit wird im vorliegend betrachteten Beispiel Gebrauch gemacht. Wie insbesondere aus den Figuren 6 und 7 ersichtlich ist, weisen die Längsschenkel 161 und 162 der ersten Verstellvorrichtung 160 an ihren dem Abspannrahmen 140 zugewandten Seiten mehrere Rollen 167 auf. Im betrachteten Beispiel sind pro Längsschenkel 161, 162 zwei Rollen 167 vorgesehen, nämlich eine im vorderen Bereich und eine im hinteren Bereich der jeweiligen Längsschenkel.

Wie insbesondere aus der Figur 5, aber auch aus der Figur 7 ersichtlich ist, weist der Abspannrahmen 140 an seinen den Rollen 167 zugewandten Seiten Aufsätze mit darin ausgebildeten Nuten 147 auf. Die Nuten 147 sind in den Rollen 167 zugewandten vertikalen Flächen der Aufsätze vorgesehen. Sie weisen eine Breite auf, die etwa dem Durchmesser der Rollen 167 entspricht, und sind im Übrigen so angeordnet und ausgebildet, dass sich im bestimmungsgemäß zusammengebauten Zustand die Rollen 167 in diesen Nuten 147 befinden und diese während des normalen Betriebes der Anordnung nicht verlassen können. Bei einem Verschieben der Längsschenkel 161, 162 laufen die Rollen 167 entsprechend der Verschieberichtung in den Nuten 147 hin und her. Aufgrund des von unten nach oben ansteigenden Verlaufes der Nuten 147 wird der Abspannrahmen 140 durch eine vom Motor 164 weg erfolgende Vorwärtsbewegung des Schiebers 161-163 nun unten bewegt, und wird der Abspannrahmen 140 durch eine zum Motor 164 hin erfolgende Rückwärtsbewegung des Schiebers 161-163 nun oben bewegt. Dabei hängt der Umfang der Auf- und Abbewegung des Abspannrahmens 140 vom Umfang der Vor- und Zurückbewegung des Schiebers 161-163 ab. Mit dieser vertikalen Bewegung des Abspannrahmens 140 erfolgt auch eine entsprechende Bewegung des daran fixierten Wechselrahmens 110 und der von diesem getragenen Dachglocke 101, so dass im Ergebnis durch die erste Verstellvorrichtung 160 die Dachglocke 101 vertikal verschiebbar und wunschgemäß positionierbar ist.

Es dürfte einleuchten und bedarf keiner näheren Erläuterung, dass der Abspannrahmen 140 und der Schieber 161-163 auch anders als beschrieben, also nicht über am Schieber 161-163 vorgesehene Rollen 167, die in am Abspannrahmen vorgesehenen Nuten 147 laufen, gekoppelt werden können, um die beschriebene Bewegbarkeit des Abspannrahmens 140 erreichen. Hierzu existieren unzählige Alternativen. Es ist nicht einmal zwingend notwendig, hierfür einen Schieber vorzusehen. Der Abspannrahmen 140 kann auch auf mannigfaltige andere Art und Weise wunschgemäß bewegt werden.

Für die Steuerung der ersten Verstellvorrichtung 160 existieren mehrere Möglichkeiten. Eine erste Möglichkeit besteht darin, dass die Verstellvorrichtung 160 basierend auf einmal erfolgten oder nur selten wiederholten Festlegungen immer genau gleich angesteuert wird. Dabei kann für jede Dachglocke, die zum Einsatz kommen kann, eine eigene Festlegung erfolgen, so dass also bei Bedarf verschiedene Dachglocken unterschiedlich weit nach unten bewegt werden können. Eine andere Möglichkeit besteht darin, dass während des normalen Betriebes der Anordnung durch automatisch ablaufende Messungen in kurzen zeitlichen Abständen oder fortlaufend, zumindest aber bei jedem Dachglockenwechsel überprüft wird, ob sich die jeweilige Dachglocke in ihrer bestimmungsgemäßen Position befindet und dass dann, wenn eine Abweichung festgestellt wird, zu einem geeigneten Zeitpunkt eine Nachjustierung erfolgt.

Wenn die gerade in der Arbeitsstation verwendete Dachglocke 101 durch eine andere Dachglocke ersetzt werden muss, weil im nächsten Arbeitsschritt Arbeiten an einer Rohkarosse für ein anderes Kraftfahrzeug durchzuführen sind, werden zunächst die Schieber 146 so weit zurückgefahren, bis sie die in der Figur 8A gezeigte Position erreicht haben. Anschließend wird durch eine Transportvorrichtung, welche in den Figuren 9 und 10 teilweise gezeigt ist, der Wechselrahmen 110 mit der bisher verwendeten Dachglocke 101 angehoben und abtransportiert. Vorzugsweise bereits während des Abtransports der bisher verwendeten Dachglocke 101 wird ein anderer Wechselrahmen 110 mit einer anderen Dachglocke 101 antransportiert und von oben auf den Abspannrahmen 104 aufgesetzt. Danach wird der Wechselrahmen 110 unter Verwendung der Schieber 146 am Abspannrahmen 140 fixiert. Abschließend oder bereits zu einem beliebigen früheren Zeitpunkt wird durch eine entsprechende Bewegung des Schiebers 161 - 163 der ersten Verstellvorrichtung 160 der Abspannrahmen 140 in die Position gebracht, die er innehaben muss, damit sich die neue Dachglocke 101 vertikal in ihrer bestimmungsgemäßen Position befindet.

Der Vollständigkeit halber sei angemerkt, dass im betrachteten Beispiel nicht für jede Dachglocke 101 ein eigener Wechselrahmen 110 vorgesehen ist. Es ist vielmehr so, dass an der Unterseite jedes Wechselrahmens eine Andockvorrichtung 106 (siehe Figur 4) vorgesehen ist, unter Verwendung welcher der Wechselrahmen an verschiedene Dachglocken 101, genauer gesagt an die Adapter 105 von verschiedenen Dachglocken 101 andockbar ist. Bei der vorliegend verwendeten Transportvorrichtung sind also die Wechselrahmen fester Bestandteil der Transportvorrichtung und werden im normalen Betrieb nicht von dieser abgenommen. Auch der Wechselrahmen 110, der während des Betriebes der Anlage auf den Basisaufbau 130 aufgesetzt und an diesem fixiert ist, bleibt mit dem Transportsystem, genauer gesagt mit einer den Wechselrahmen bei Bedarf auf- und abbewegenden z-Achse verbunden. Wenn mehr verschiedene Dachglocken benötigt werden als Wechselrahmen vorhanden sind, werden die gerade nicht benötigten Dachglocken vom Wechselrahmen abgedockt und in einem Dachglockenlager gelagert.

Die hier vorgestellte Anordnung enthält darüber hinaus eine zweite Verstellvorrichtung 180, durch welche im auf dem Basisaufbau 130 aufgesetzten Zustand des die Dachglocke 101 tragenden Wechselrahmens 110 die horizontale Position der Dachglocke 101 veränderbar ist.

Die zweite Verstellvorrichtung 180 ist im Wechselrahmen 110 untergebracht. Sie umfasst einen in Längsrichtung des Wechselrahmens 110 verfahrbaren Schlitten 181, welcher über einen Elektromotor 182 und eine Gewindespindel 183 bewegbar ist.

Wie insbesondere aus der Figur 4 ersichtlich ist, ist der Adapter 105, über welche die Dachglocke 101 mit dem ersten Rahmen 110 verbunden ist, an der Unterseite des Schlittens 181 befestigt. Eine Bewegung des Schlittens 181 hat also zugleich eine entsprechende horizontale Bewegung der Dachglocke 101 zur Folge. Somit ist die Dachglocke 101 bei Bedarf auch in x-Richtung horizontal bewegbar.

Die vorstehend beschriebene Anordnung erweist sich unabhängig von den Einzelheiten der praktischen Realisierung und unabhängig vom genauen Einsatzzweck in mehrfacher Hinsicht als sehr vorteilhaft.

### Bezugszeichenliste

- 1: Transportrichtung Rohkarossen
- 2: Fahrwagen
- 3: Fahrwagen
- 4: Portalbrücke
- 5: Portalbrücke
- 21: z-Achse an 2
- 22: z-Achse an 2
- 23: z-Achse an 2
- 31: z-Achse an 3
- 32: z-Achse an 3
- 33: z-Achse an 3

- 101: Dachglocke
- 102: Dach
- 105: Adapter
- 106: Andockvorrichtung

- 110: erster Rahmen
- 111: Zentrieröffnung
- 112: Rolle

- 130: Basisaufbau
- 131: Säule
- 132: Trägerkonstruktion
- 133: Längsträger
- 134: Längsträger
- 135: Querträger
- 136: Querträger
- 137: Rohkarossen-Durchlaufrichtung

- 140: zweiter Rahmen
- 141: Längsholm
- 142: Längsholm
- 143: Querholm
- 144: Querholm
- 145: Zentrierkonus
- 146: Schieber
- 147: Nut

- 160: erste Verstellvorrichtung
- 161: Längsschenkel
- 162: Längsschenkel
- 163: Querschenkel
- 164: Elektromotor
- 165: Gewindespindel
- 167: Führungsrolle

- 180: zweite Verstellvorrichtung
- 181: Schlitten
- 182: Elektromotor
- 183: Gewindespindel

## Patentansprüche

1. Anordnung, durch welche während der Herstellung einer Vorrichtung lose zusammengefügte Einzelteile der Vorrichtung in ihre bestimmungsgemäße Relativlage bringbar sind, mit
- einer Spannvorrichtung (101), durch welche wenigstens eines der Einzelteile in die bestimmungsgemäße Relativlage zu wenigstens einem weiteren Einzelteil bringbar ist,
- einem die Spannvorrichtung (101) tragenden Rahmen (110), und
- einem Basisaufbau (130), auf welchen der Rahmen (110) von oben her aufsetzbar ist, und an welchem der darauf aufgesetzte Rahmen so fixierbar ist, dass der Rahmen in Bezug zu der Basisaufbau-Komponente (140), an welcher er fixiert ist, nicht bewegbar ist,
**dadurch gekennzeichnet,**
**dass** ein Verstellmechanismus (160, 180) vorgesehen ist, durch welchen auch noch im am Basisaufbau (130) fixierten Zustand des die Spannvorrichtung (101) tragenden Rahmens (110) die Position der Spannvorrichtung (101) wunschgemäß veränderbar ist.

2. Anordnung nach Anspruch 1, **dadurch gekennzeichnet, dass** die unter Verwendung der Anordnung herzustellende Vorrichtung eine Rohkarosse eines Kraftfahrzeuges ist, und dass die Spannvorrichtung (101) eine Dachglocke ist, in welcher des Dach (102) des Kraftfahrzeuges während der Verbindung mit dem Rest der bis dahin fertiggestellten Rohkarosse eingespannt und fixiert wird.

3. Anordnung nach Anspruch 1 oder 2, **dadurch gekennzeichnet, dass** die Anordnung dazu ausgelegt ist, in aufeinanderfolgenden Arbeitsschritten unter Verwendung verschiedener Spannvorrichtungen (101) Einzelteile unterschiedlicher Vorrichtungen in ihre bestimmungsgemäße Relativlage zu bringen, und dass die Transportvorrichtung dazu ausgelegt ist, zwischen zwei aufeinanderfolgenden Arbeitsschritten den am Basisaufbau (130) befindlichen Rahmen (110) mit der von diesem getragenen Spannvorrichtung (101) durch einen andere Rahmen/Spannvorrichtungs-Kombination (110, 101) zu ersetzen.

4. Anordnung nach einem der vorhergehenden Ansprüche, **dadurch gekennzeichnet, dass** der Basisaufbau (130) unbewegbare Komponenten (131, 132, 133, 134, 135), die fest irgendwo verankert oder starr miteinander verbunden sind, und relativ zu den unbewegbaren Komponenten bewegbare Komponenten (140, 160) aufweist, wobei der die Spannvorrichtung (101) tragende Rahmen (110) auf eine der bewegbaren Basisaufbau-Komponenten aufgesetzt und an dieser fixiert ist.

5. Anordnung nach einem der vorhergehenden Ansprüche, **dadurch gekennzeichnet, dass** der Verstellmechanismus (160, 180) eine erste Verstellvorrichtung (160) enthält, welche dazu ausgelegt ist, durch eine Bewegung der Basisaufbau-Komponente (140), an welcher der die Spannvorrichtung (101) tragende Rahmen (110) fixiert ist, die vertikale Position der Spannvorrichtung (101) zu verändern.

6. Anordnung nach Anspruch 5, **dadurch gekennzeichnet, dass** die erste Verstellvorrichtung (160) einen am Basisaufbau (130) vorgesehenen Schieber (161-163) aufweist, der in Bezug zu der den Rahmen (110) tragenden Basisaufbau-Komponente (140) horizontal verschiebbar ist, wobei der Schieber (161-163) und die den Rahmen (110) tragende Basisaufbau-Komponente (140) derart miteinander gekoppelt sind, dass durch ein horizontales Verschieben des Schiebers (161-163) in Bezug zu der den Rahmen (110) tragenden Basisaufbau-Komponente (140) eine vertikale Bewegung der den Rahmen (110) tragenden Basisaufbau-Komponente (140) erzwungen wird.

7. Anordnung nach Anspruch 6, **dadurch gekennzeichnet,**
- **dass** am Schieber (161-163) auf der Seite, die der den Rahmen (110) tragenden Basisaufbau-Komponente (140) zugewandt ist, Rollen (167) vorgesehen sind, die um eine senkrecht zur Schieberichtung des Schiebers verlaufende horizontale Achse drehbar sind,
- **dass** in den Rollen (167) zugewandten vertikalen Flächen der den Rahmen (110) tragenden Basisaufbau-Komponente (140) Nuten (147) ausgebildet sind, welche etwa eine dem Rollendurchmesser entsprechende Breite haben und die im Übrigen so ausgebildet sind, dass die Rollen (167) darin laufen können,
- wobei die Nuten (147) von unten nach oben ansteigen und die Rollen (167) in vertikaler Richtung nicht bewegbar sind.

8. Anordnung nach einem der vorhergehenden Ansprüche, **dadurch gekennzeichnet, dass** der Verstellmechanismus (160, 180) eine zweite Verstellvorrichtung (180) enthält, welche dazu ausgelegt ist, die Spannvorrichtung (101) in Bezug zu dem die Spannvorrichtung tragenden Rahmen (110) horizontal zu verschieben.

9. Anordnung nach Anspruch 8, **dadurch gekennzeichnet, dass** der Rahmen (110) einen horizontal verschiebbaren Schlitten (181) aufweist, und dass die vom Rahmen (110) getragene Spannvorrichtung (101) am Schlitten (181) befestigt ist.

10. Anordnung nach einem der vorhergehenden Ansprüche, **dadurch gekennzeichnet, dass** an der den Rahmen (110) tragenden Basisaufbau-Komponente (140) horizontal verschiebbare Schieber (146) angeordnet sind, die dazu ausgelegt sind, im auf den Basisaufbau (130) aufgesetzten Zustand des Rahmens (110) über den Rahmen (110) geschoben zu werden und diesen einhergehend damit bis zum Anschlag auf die den Rahmen (110) tragenden Basisaufbau-Komponente (140) zu drücken.

11. Anordnung nach Anspruch 10, **dadurch gekennzeichnet, dass** auf der Oberseite des Rahmens (110) Rollen (112) vorgesehen sind, und dass die Rollen (112) und die Schieber (146) derart angeordnet und ausgebildet sind, dass die Schieber (146) beim Schieben derselben über den Rahmen (110) mit ihrer Unterseite in Kontakt mit den Rollen (112) kommen und die Rollen zusammen mit dem diese tragenden Rahmen (110) nach unten drücken.

12. Anordnung nach Anspruch 10 oder 11, **dadurch gekennzeichnet, dass** die Unterseite der Schieber (146) eine Schräge aufweist, so dass es vom Umfang des Verschiebens der Schieber (146) abhängt, wie stark der Rahmen (110) nach unten gedrückt wird.
